# DEMANDE DE BREVET EUROPEEN

(11) **EP 4 357 003 A1**
(43) Date de publication de la demande: **24.04.2024**
(21) Numéro de dépôt: 23197692.9
(22) Date de dépôt: 15.09.2023
(51) Int. Cl.: B01D 53/22, B01D 53/00, C01B 3/50, F25J 3/02, F25J 3/06, B01D 53/047, C01B 3/52, C01B 3/56

(54) **PROCÉDÉ ET APPAREIL DE SÉPARATION D'UN MÉLANGE D'HYDROGÈNE ET DE DIOXYDE DE CARBONE**

(30) Priorité: 19.10.2022 FR 2210786
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: PERE, Félix, 94305 CHAMPIGNY SUR MARNE (FR); LECLERC, Mathieu, 94503 CHAMPIGNY (FR)
(74) Mandataire: Air Liquide

(57) **Abrégé**

Dans un procédé de séparation d'un mélange contenant de l'hydrogène et du dioxyde de carbone, on comprime (9) du mélange (7) pour former un mélange comprimé, on sépare le mélange comprimé par condensation partielle et/ou distillation générant un premier flux appauvri en CO2 (25), on sépare par perméation dans un système membranaire (27) du premier flux appauvri en CO2 (25) pour former un résidu (35) du système membranaire appauvri en hydrogène et dioxyde de carbone et on recycle une partie du résidu après détente au compresseur (9) pour y être comprimé.

## Description

La présente invention est relative à un procédé et appareil de séparation d'un mélange d'hydrogène et de dioxyde de carbone en particulier d'un mélange comprenant également au moins un autre composant, tel que le monoxyde de carbone, le méthane ou l'azote. Le mélange peut éventuellement comprendre de l'eau.

Il présente un avantage particulier pour de tels procédés dans lequel le mélange à séparer a été précédemment séparé par adsorption, par exemple dans un PSA H2, pour produire un gaz enrichi en hydrogène et appauvri en dioxyde de carbone et ce mélange sous forme gazeuse qui est appauvri en hydrogène et enrichi en dioxyde de carbone par rapport au gaz traité dans l'adsorption.

Pour de tels procédés équipés de turbines, l'invention permet de réduire la charge du procédé de séparation de manière stable et performant.

Le procédé d'adsorption qui produit le mélange à séparer traite souvent un gaz issu d'un procédé de reformage tel qu'un reformeur à vapeur d'eau et à méthane connu sous l'acronyme SMR, un reformeur autothermique connu sous l'acronyme ATR ou une oxydation partielle connue sous l'acronyme POX.

WO2012/064938, WO2012/064941 et WO2012/158673 décrivent la séparation par perméation d'un débit d'incondensables venant d'une séparation à basse température de CO2, impliquant la détente en turbine d'un résidu et la compression d'un perméat.

Selon l'invention, le procédé traite un gaz, pouvant être le gaz résiduaire appauvri en hydrogène venant d'un procédé d'adsorption, par exemple de type à bascule de pression connu sous l'acronyme PSA. Ce gaz peut être comprimé, séché, séparé par condensation partielle et/ou distillation pour produire un fluide enrichi en CO2, un gaz résiduaire de la condensation partielle et/ou la distillation étant séparé par perméation dans deux unités membranaires.

Selon un objet de l'invention, il est prévu un procédé de séparation d'un mélange contenant de l'hydrogène, du dioxyde de carbone, et au moins un composant tel que le monoxyde de carbone, le méthane ou l'azote et éventuellement de l'eau comprenant les étapes suivantes :
a) Compression du mélange depuis une première pression jusqu'à une deuxième pression pour former un mélange comprimé,
b) Éventuellement séchage du mélange comprimé pour former un mélange séché à la deuxième pression,
c) Séparation du mélange comprimé et éventuellement séché à la deuxième pression ou à une troisième pression plus élevée que la deuxième pression par condensation partielle et/ou distillation générant au moins un produit enrichi en CO2 et un premier flux appauvri en CO2,
d) Séparation par perméation dans un système membranaire du premier flux appauvri en CO2 pour former au moins un perméat du système membranaire enrichi en hydrogène et en dioxyde de carbone et appauvri en l'au moins un composant par rapport au premier flux appauvri en CO2 et un résidu du système membranaire appauvri en hydrogène et dioxyde de carbone et enrichi en l'au moins un composant par rapport au premier flux appauvri en CO2,
e) Détente d'au moins une partie du résidu dans au moins une turbine caractérisé par le recyclage d'au moins une partie du résidu issu de l'au moins une turbine au compresseur pour y être comprimé, éventuellement après s'être mélangé avec le mélange à la première pression à l'entrée du compresseur. L'étape de séchage n'est pas nécessaire si le mélange ne contient pas d'eau. Selon d'autres aspects facultatifs :
   - le système membranaire comprend une première unité membranaire et une seconde unité membranaire et dans lequel on envoie au moins une partie du premier flux à la première unité membranaire pour obtenir un premier perméat enrichi en hydrogène et en dioxyde de carbone et appauvri en l'au moins un composant par rapport au premier flux appauvri en CO2 et un premier résidu appauvri en hydrogène et dioxyde de carbone et enrichi en l'au moins un composant par rapport au premier flux appauvri en CO2, on envoie au moins une partie du premier résidu dans la seconde unité membranaire permettant d'obtenir un second perméat enrichi en hydrogène et dioxyde de carbone et appauvri en l'au moins un composant par rapport au premier résidu et un second résidu appauvri en hydrogène et dioxyde de carbone enrichi en l'au moins un composant par rapport au premier résidu qui est le résidu de l'étape e).
   - on détend le résidu dans deux turbines en série.
   - on envoie une autre partie du résidu issu de l'au moins une turbine pour régénérer l'unité où s'effectue le séchage du mélange comprimé de l'étape b).
   - on comprime le perméat dans un ou plusieurs surpresseurs ou selon la revendication 2 dans lequel on comprime du premier perméat et/ou du second perméat dans un ou plusieurs surpresseurs.

Selon un autre objet de l'invention, il est prévu un procédé de séparation d'un mélange contenant majoritairement de l'hydrogène, du dioxyde de carbone, et au moins un composant tel que le monoxyde de carbone, le méthane ou l'azote et éventuellement de l'eau opérant selon deux modes d'opération et qui pour les deux modes comprend les étapes suivantes :
a) Compression du mélange depuis une première pression jusqu'à une deuxième pression pour former un mélange comprimé
b) Éventuellement séchage du mélange comprimé pour former un mélange séché à la deuxième pression
c) Séparation du mélange comprimé et éventuellement séché à la deuxième pression ou à une troisième pression plus élevée que la deuxième pression par condensation partielle et/ou distillation générant au moins un produit enrichi en CO2 et un premier flux appauvri en CO2
d) Séparation par perméation dans un système membranaire du premier flux appauvri en CO2 pour former au moins un perméat du système membranaire enrichi en hydrogène et en dioxyde de carbone et appauvri en l'au moins un composant par rapport au premier flux appauvri en CO2 et un résidu du système membranaire appauvri en hydrogène et dioxyde de carbone et enrichi en l'au moins un composant par rapport au premier flux appauvri en CO2
e) Détente d'au moins une partie du résidu dans au moins une turbine caractérisé en ce que selon un premier mode d'opération dans lequel le débit du mélange envoyé au compresseur a une première valeur, on n'envoie aucune partie du résidu issu de l'au moins une turbine au compresseur et selon un deuxième mode d'opération dans lequel le débit du mélange envoyé au compresseur a une deuxième valeur inférieure à la première valeur, on recycle une partie du résidu issu de l'au moins une turbine au compresseur pour être comprimée avec le mélange à la première pression.

Selon d'autres aspects facultatifs :
- pendant le deuxième mode on envoie une partie du premier flux à l'entrée de l'au moins une turbine sans l'avoir traitée dans le système membranaire.
- pendant le deuxième mode on n'envoie pas de partie du premier flux à l'entrée de l'au moins une turbine sans l'avoir traitée dans le système membranaire.
- pendant le premier mode on n'envoie pas une partie du premier flux à l'entrée de l'au moins une turbine sans l'avoir traitée dans le système membranaire. Selon un autre aspect de l'invention, il est prévu un appareil de séparation d'un mélange contenant de l'hydrogène, du dioxyde de carbone et au moins un composant tel que le monoxyde de carbone, le méthane ou l'azote ainsi qu'éventuellement de l'eau comprenant un compresseur pour la
compression du mélange depuis une première pression jusqu'à une deuxième pression pour former un mélange comprimé, éventuellement une unité de séchage pour le séchage du mélange comprimé pour former un mélange séché à la deuxième pression, une unité de séparation par condensation partielle et/ou distillation pour la séparation du mélange comprimé et éventuellement séché à la deuxième pression ou à une troisième pression plus élevée que la deuxième pression pour former au moins un produit enrichi en CO2 et un premier flux appauvri en CO2, un système membranaire pour la séparation par perméation dans du premier flux appauvri en CO2 pour former au moins un perméat du système membranaire enrichi en hydrogène et en dioxyde de carbone et appauvri en l'au moins un composant par rapport au premier flux appauvri en CO2 et un résidu du système membranaire appauvri en hydrogène et dioxyde de carbone et enrichi en l'au moins un composant par rapport au premier flux appauvri en CO2,
au moins une turbine pour détendre d'au moins une partie du résidu caractérisé en ce qu'il comprend une conduite reliée à la sortie de l'au moins une turbine pour envoyer au moins une partie du résidu à l'entrée du compresseur pour la comprimer dans le compresseur.

L'appareil peut comprendre des moyens pour mesurer ou déduire le débit de mélange envoyé au compresseur et des moyens pour ouvrir la conduite reliée à la sortie de l'au moins une turbine pour envoyer au moins une partie du résidu à l'entrée du compresseur en fonction du débit de mélange envoyé au compresseur. L'invention sera décrite de manière plus détaillée en se référant aux figures :
[FIG.1] montre un procédé de traitement de gaz de synthèse dans lequel le procédé selon l'invention est intégré, ici montrant l'opération avec un débit nominal
[FIG.2] montre de manière plus détaillée la séparation par unités membranaires selon un exemple pouvant être utilisé dans un procédé selon l'invention
[FIG.3] montre un procédé de traitement de gaz de synthèse dans lequel le procédé selon l'invention est intégré, ici montrant l'opération avec un débit réduit
[FIG.4] montre le rendement en CO2 d'un procédé selon l'invention (recycle) et d'un autre procédé (référence)
[FIG.5] montre le rendement en H2 d'un procédé selon l'invention (recycle) et d'un autre procédé (référence).

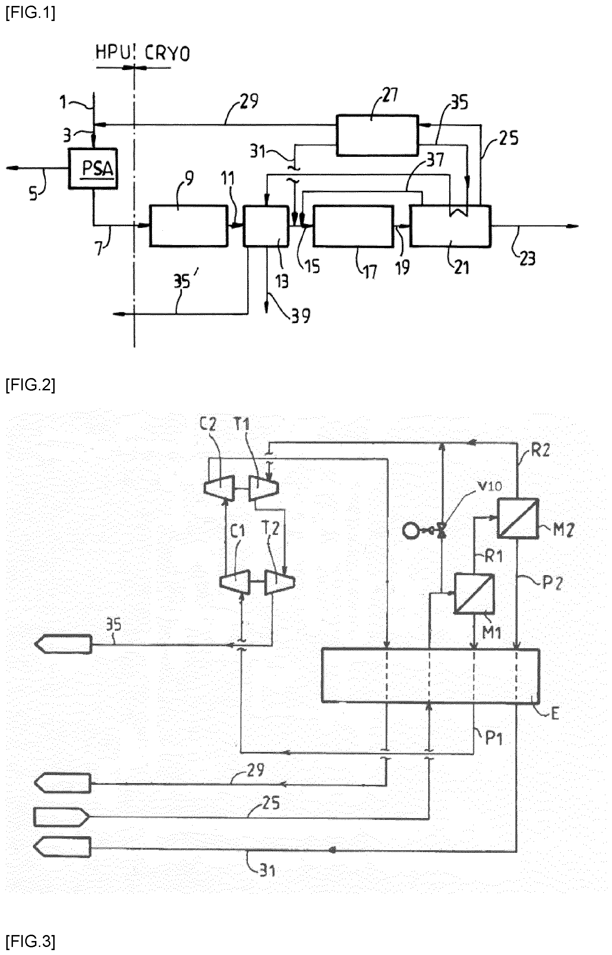

Figure 1 montre un procédé de traitement de gaz de synthèse 1 provenant par exemple d'un SMR, d'un ATR ou d'un POX. Ce gaz contient de l'hydrogène et de dioxyde de carbone et au moins un autre composant, tel que le monoxyde de carbone, le méthane ou l'azote.

Le gaz 1 est séparé par adsorption à bascule de pression dans une unité PSA faisant partie de l'unité de production d'hydrogène HPU. L'unité produit un gaz 5 enrichi en hydrogène et appauvri en dioxyde de carbone ainsi qu'un gaz 7 appauvri en hydrogène et enrichi en dioxyde de carbone contenant également au moins un autre composant, tel que le monoxyde de carbone, le méthane ou l'azote. Le gaz 7 peut par exemple comprendre 40-60% mol CO2, ainsi que de l'eau, de l'H2, du CO, du CH4 et de l'N2.

Le gaz 7 est comprimé dans un compresseur 9, le gaz comprimé 11 est éventuellement séché dans une unité de séchage 13 produisant des condensats 39 et le gaz éventuellement séché 15 est de nouveau comprimé par un compresseur 17 produisant un gaz comprimé 19. Cette deuxième compression est facultative et si le gaz 7 est sec le séchage est également facultatif. Le gaz comprimé est refroidi et puis séparé par condensation partielle et/ou par distillation pour produire un liquide ou un gaz riche en dioxyde de carbone 23, contenant par exemple 99% mol CO2. Le procédé de condensation partielle et/ou de distillation 21 produit également un gaz 25 appauvri en CO2 par rapport au gaz 19 mais contenant de dioxyde de carbone et la plupart de l'hydrogène, de l'azote, du monoxyde de carbone et du méthane présent dans le gaz 19. Le procédé 21 peut également produire un gaz 37 appauvri en CO2 par rapport au gaz 19 qui se trouve à une pression plus basse que le gaz 25. Le gaz 37 est recyclé en amont du compresseur 17.

Le gaz 25 est séparé par perméation dans deux unités membranaires en série dans un appareil 27. Cet appareil produit :
- Un gaz riche en hydrogène 29 contenant entre 65 et 85% mol d'hydrogène qui est recyclé à l'unité PSA pour être séparé, par exemple en le mélangeant au gaz de synthèse 1.
- Un gaz enrichi en CO2 31 qui est recycle à l'entrée du compresseur 17, par exemple en étant mélangé avec le débit 15.
- Un gaz 35, 35' enrichi en N2, CO et CH4, contenant peu de CO2 et de H2 content (en total moins que 10 mol%) qui peut servir de carburant.

Le gaz 35 sert en totalité à régénérer l'unité de séchage 13 et ensuite comme débit 35' est envoyé à l'unité produisant le gaz 1 (par exemple SMR, ATR, POX) pour être brûlé pour apporter de la chaleur à la réaction qui se produit dans l'unité ou pour servir de gaz d'alimentation pour la réaction.

Pour rendre la séparation par perméation plus efficace, on utilise des turbines couplées à des compresseurs, les compresseurs servant à comprimer le gaz 29 afin de réduire sa pression de perméation. Les turbines détendent un résidu de la séparation par membranes qui est le gaz 35 et fournissent du froid à la séparation par condensation partielle et/ou distillation dans l'appareil de séparation 21.

Le procédé selon l'invention peut permettre de récupérer plus que 97% du CO2 et plus que 99% de l'hydrogène présent dans le gaz de synthèse alimentant l'unité d'adsorption alors qu'un PSA récupère typiquement 88-90% de l'hydrogène dans le gaz de synthèse.

[FIG.1] montre un procédé selon l'invention opérant selon un premier mode où le débit 7 envoyé au compresseur 9 est un débit nominal.

[FIG.2] montre un procédé pouvant être utilisé pour séparer le débit 25 de la Figure 1 par perméation. Il sera compris que d'autres procédés peuvent y être substitués en particulier des procédés utilisant une seule turbine pour détendre le gaz 35. Le gaz 25 provient de la séparation par condensation partielle et/ou par distillation 21 et ainsi a été épuré pour enlever du dioxyde de carbone. Il contient de l'hydrogène, du dioxyde de carbone et au moins un autre composé, de préférence du monoxyde de carbone et/ou du méthane et/ou de l'azote, et est réchauffé dans un échangeur de chaleur E, typiquement jusqu'à une température entre 70 et 90°C, et envoyé à une première unité membranaire M1. Le gaz 25 est séparé par perméation du flux dans la première unité membranaire M1 pour obtenir un premier perméat P1 enrichi en hydrogène et en dioxyde de carbone et appauvri en l'au moins un composant par rapport au gaz 25 et un premier résidu R1 appauvri en hydrogène et dioxyde de carbone et enrichi en l'au moins un composant par rapport au gaz 25.

Le premier résidu R1 est séparé par perméation dans une seconde unité membranaire M2 permettant d'obtenir un second perméat P2 enrichi en hydrogène et dioxyde de carbone et appauvri en l'au moins un composant par rapport au premier résidu R1 et un second résidu R2 appauvri en hydrogène et dioxyde de carbone enrichi en l'au moins un composant par rapport au premier résidu R1.

Le premier perméat P1 est comprimé par deux surpresseurs en série C1, C2 et envoyé à l'échangeur E pour se refroidir avant d'être envoyé pour être séparé par adsorption dans l'unité PSA comme gaz 29.

Le deuxième perméat P2 est refroidi dans l'échangeur E et recyclé au compresseur comme débit 31 pour être de nouveau séparé par condensation partielle et/ou distillation par la suite.

Le deuxième résidu est détendu dans deux turbines en série T1, T2, n'est pas envoyé à l'échangeur E mais sort comme gaz 35 qui sert d'abord à régénérer les sécheurs 13 et ensuite comme gaz 35' est envoyé à l'unité de production du gaz de synthèse 1 soit pour produire de la chaleur en étant brûlé dans les brûleurs soit pour participer à la réaction chimique.

Si le procédé fonctionne à pleine charge, la vanne V10 reliant l'entrée de la première unité membranaire avec l'entrée de la turbine T1 sera fermée.

Les surpresseurs C1, C2 sont ici couplés aux turbines T1, T2 respectivement.

Un procédé avec une seule turbine de détente peut remplacer celui de la Figure 2. Un procédé avec une ou plusieurs turbine(s) couplée(s) avec un/d'autre(s) surpresseurs peut aussi remplacer celui de la Figure 2.

Il sera également compris que le système membranaire peut comprendre une seule unité membranaire produisant un seul perméat enrichi en dioxyde de carbone et en hydrogène et appauvri en l'au moins un autre composant et un seul résidu enrichi en l'au moins un autre composant et appauvri en dioxyde de carbone et en hydrogène.

Selon le procédé, l'au moins une turbine T1, T2 est alimentée par le résidu R2 d'une unité membranaire M2 qui est le second de deux unités membranaires en série M1, M2. Le débit de l'au moins une turbine dépend du débit envoyé à la première des deux unités membranaire ainsi que de la surface des membranes installées. Quand la charge des unités membranaires réduit, le débit à l'entrée des unités membranaires réduit de manière proportionnelle (les performances de la section de distillation et/ou de condensation partielle sont quasiment indépendantes de la charge).

Or puisque la surfaces des membranes est constante, la proportion du gaz à séparer qui permée augmente avec le débit du gaz à séparer dans l'unité membranaire. Ainsi le débit de résidu réduit plus vite que le débit d'alimentation. Par exemple, à une charge de 85% du nominal, le débit du résidu sera de 80%. Ceci a un impact direct sur les turbines T1, T2, car la vitesse des machines est directement corrélée au débit détendu dans la turbine. Des vitesses insuffisantes peuvent entraîner une instabilité de la machine, une mauvaise opérabilité et finalement des dommages. Notez que l'ordre de grandeur de la variation minimale à laquelle les turbodétendeurs peuvent fonctionner en toute sécurité est d'environ 80 %.

Une solution à ce problème peut être de d'envoyer du gaz à séparer 25 directement à l'au moins une turbine T1, T2, sans le séparer dans les unités membranaires M1, M2. De cette manière, le débit à détendre peut-être régulé et en conséquence la turbine peut être protégée et fonctionner avec un débit qui ne pose pas de problème de sécurité.

Or en passant le gaz à séparer directement à la turbine ou aux turbines, on réduit l'efficacité globale de la séparation par perméation en envoyant au réseau de gaz produit par la séparation des gaz qui n'ont pas été purifié par les unités membranaires. De plus, en envoyant du gaz à séparer directement aux turbines, on réduit encore plus le débit traité par les unités membranaires qui reçoivent moins de gaz à séparer et ainsi le résidu de la seconde unité membranaire réduit encore plus. La fraction 25' de gaz à traiter envoyée directement aux turbines doit être assez grand pour maintenir les débits à détendre, ce qui réduit encore plus l'efficacité du procédé.

Un autre problème est que la composition du gaz détendu est modifiée en envoyant du gaz à traiter directement à la turbine ou aux turbines puisque le contenu en hydrogène et CO2 augmentera de manière significative. Ainsi la ou les turbines doivent être conçues pour détendre des compositions très variables.

La solution selon l'invention sera maintenant décrite en se référant à la Figure 3 qui montre le procédé de la Figure 1 opérant à charge réduite.

Les unités membranaires M1, M2 permettent à différentes espèces de pénétrer différemment. Les molécules « les plus rapides » imprègnent en premier, et les « plus lentes » imprègnent moins. Une membrane crée ainsi un flux enrichi en espèces « rapides » et un flux appauvri en ces espèces.

Pour les membranes utilisées dans un procédé selon l'invention, les molécules les plus rapides sont H2 et CO2, et les plus lentes sont CH4, CO et N2. Théoriquement, pour une surface de membrane donnée, un flux avec une teneur plus élevée en CO, N2 et CH4 générera un débit de résidu plus élevé qu'un flux avec une teneur plus élevée en H2 et CO2.

Par conséquent, il serait avantageux pour les turbines d'enrichir le gaz d'alimentation 25 en N2, CO et CH4, car plus de résidu R2 serait disponible et moins d'envoi de gaz à traiter directement à la turbine serait nécessaire. Heureusement, tout le gaz 35 n'a pas besoin d'être utilisé pour la régénération des sécheurs 13 quand on opère à faible charge. En effet, le débit détendu est éventuellement maintenu constant en ouvrant la vanne V10 et en envoyant une partie 25' du débit à séparer directement aux turbines, sans passer par les unités membranaires, alors que le débit requis pour la régénération des sécheurs 13 est à peu près proportionnel à la charge unitaire. Au fur et à mesure que la charge unitaire diminue, une part croissante 32 du gaz 35 est disponible pour d'autres usages que la régénération des sécheurs 13 (si présents). D'ailleurs les sécheurs 13 peuvent être régénérés par un autre gaz présent sur le site et ainsi tout le gaz 35 peut être envoyé au compresseur 9 pour être comprimé.

Cette partie 32 du gaz 35 peut être recyclée à l'entrée de l'unité de traitement pour être comprimé dans un compresseur 9 en amont des sécheurs avec le gaz 7 venant de l'adsorption PSA.

De préférence, l'envoi du débit 32 en amont du compresseur est déclenché par un débitmètre qui mesure le débit 1 et/ou le débit 3 et/ou le débit 7 et permet l'envoi du débit 32 uniquement si le débit 1 et/ou le débit 3 et/ou le débit 7 passe en dessous d'un seuil. L'appareil comprend ainsi des moyens pour mesurer ou déduire le débit de mélange 7 envoyé au compresseur 9 et des moyens pour ouvrir la conduite reliée à la sortie de l'au moins une turbine T2 pour envoyer au moins une partie 32 du résidu à l'entrée du compresseur 9 en fonction du débit de mélange 7 envoyé au compresseur 9.

Le débit 32 peut donc être régulé afin de compenser une baisse du débit 7 de sorte que le compresseur 9 comprime un débit constant.

Le procédé a plusieurs avantages :
- La perte de performance de la membrane augmente la teneur résiduelle en H2 et CO2 du gaz combustible. Le recyclage d'une fraction de ce flux compense en partie la baisse des performances, car le CO2 et l'H2 seront en partie séparés et valorisés dans les sections cryogénique et membranaire.
- Comme l'unité est à charge très réduite, le compresseur de gaz d'échappement doit fonctionner sur son recyclage. Le recyclage supplémentaire du gaz combustible n'a donc aucun impact sur la consommation d'énergie de l'unité
- Le gaz combustible 35 étant riche en N2, CO et CH4, composés à perméation la plus lente, ce recyclage augmente d'autant plus le débit de résidu, et limite, voire supprime, ainsi le besoin de détourner une partie du gaz à traiter sans passer par les unités membranaires pour alimenter suffisamment les turbines. Cela réduit encore plus la perte de performances.

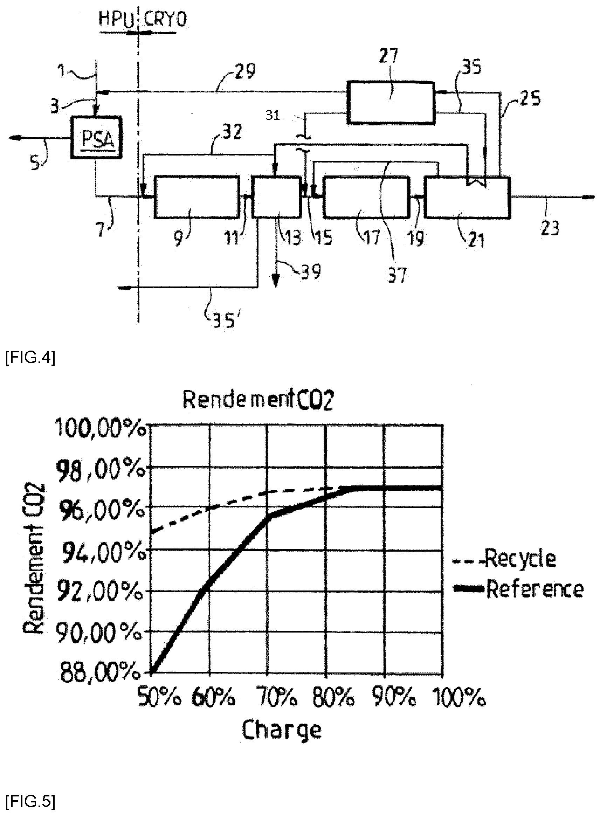

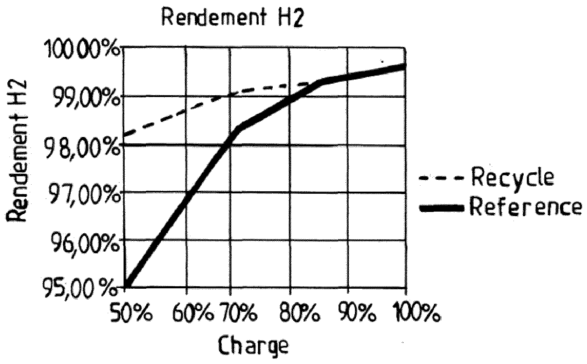

La Figure 4 compare des pertes de performances pour le CO2 (rendement CO2) avec la diminution de la charge pour les deux schémas. La Figure 5 compare des pertes de performances pour le H2 (rendement H2) avec la diminution de la charge pour les deux schémas. Comme on peut le voir, le recyclage du gaz combustible stabilise les performances, même à faible charge. La perte de performance relative est marginale par rapport à ce qui serait attendu sans cet appareil.

## Revendications

1. Procédé de séparation d'un mélange contenant de l'hydrogène, du dioxyde de carbone, et au moins un composant tel que le monoxyde de carbone, le méthane ou l'azote et éventuellement de l'eau comprenant les étapes suivantes :
a) Compression (9) du mélange (7) depuis une première pression jusqu'à une deuxième pression pour former un mélange comprimé,
b) Éventuellement séchage (13) du mélange comprimé (11) pour former un mélange séché à la deuxième pression,
c) Séparation (21) du mélange comprimé et éventuellement séché (19) à la deuxième pression ou à une troisième pression plus élevée que la deuxième pression par condensation partielle et/ou distillation générant au moins un produit enrichi en CO2 (23) et un premier flux appauvri en CO2 (25),
d) Séparation par perméation dans un système membranaire (27) du premier flux appauvri en CO2 (25) pour former au moins un perméat (P1, P2) du système membranaire enrichi en hydrogène et en dioxyde de carbone et appauvri en l'au moins un composant par rapport au premier flux appauvri en CO2 et un résidu (R1, R2, 35) du système membranaire appauvri en hydrogène et dioxyde de carbone et enrichi en l'au moins un composant par rapport au premier flux appauvri en CO2,
e) Détente d'au moins une partie du résidu dans au moins une turbine (T1, T2) **caractérisé par** le recyclage d'au moins une partie (32) du résidu issu de l'au moins une turbine au compresseur (9) pour y être comprimée, éventuellement après s'être mélangée avec le mélange à la première pression à l'entrée du compresseur.

2. Procédé selon la revendication 1 dans lequel le système membranaire (27) comprend une première unité membranaire (M1) et une seconde unité membranaire (M2) et dans lequel on envoie au moins une partie du premier flux (25) à la première unité membranaire pour obtenir un premier perméat (P1) enrichi en hydrogène et en dioxyde de carbone et appauvri en l'au moins un composant par rapport au premier flux appauvri en CO2 et un premier résidu (R1) appauvri en hydrogène et dioxyde de carbone et enrichi en l'au moins un composant par rapport au premier flux appauvri en CO2, on envoie au moins une partie du premier résidu dans la seconde unité membranaire permettant d'obtenir un second perméat (P2) enrichi en hydrogène et dioxyde de carbone et appauvri en l'au moins un composant par rapport au premier résidu et un second résidu (R2) appauvri en hydrogène et dioxyde de carbone enrichi en l'au moins un composant par rapport au premier résidu qui est le résidu de l'étape e).

3. Procédé selon la revendication 1 ou 2 dans lequel on détend le résidu (R1, R2) dans deux turbines (T1, T2) en série.

4. Procédé selon l'une des revendications précédentes dans lequel on envoie une autre partie (39) du résidu issu de l'au moins une turbine pour régénérer l'unité (13) où s'effectue le séchage du mélange comprimé de l'étape b).

5. Procédé selon la revendication 1 dans lequel on comprime le perméat dans un ou plusieurs surpresseurs ou selon la revendication 2 dans lequel on comprime du premier perméat (P1) et/ou du second perméat (P2) dans un ou plusieurs surpresseurs (C1, C2).

6. Procédé de séparation d'un mélange contenant majoritairement de l'hydrogène, du dioxyde de carbone, et au moins un composant tel que le monoxyde de carbone, le méthane ou l'azote et éventuellement de l'eau opérant selon deux modes d'opération et qui pour les deux modes comprend les étapes suivantes :
a) Compression (9) du mélange (7) depuis une première pression jusqu'à une deuxième pression pour former un mélange comprimé
b) Éventuellement séchage (13) du mélange comprimé (11) pour former un mélange séché à la deuxième pression
c) Séparation du mélange comprimé et éventuellement séché à la deuxième pression ou à une troisième pression plus élevée que la deuxième pression par condensation partielle et/ou distillation (21) générant au moins un produit enrichi en CO2 et un premier flux appauvri en CO2
d) Séparation par perméation dans un système membranaire (27) du premier flux appauvri en CO2 pour former au moins un perméat du système membranaire enrichi en hydrogène et en dioxyde de carbone et appauvri en l'au moins un composant par rapport au premier flux appauvri en CO2 et un résidu du système membranaire appauvri en hydrogène et dioxyde de carbone et enrichi en l'au moins un composant par rapport au premier flux appauvri en CO2
e) Détente d'au moins une partie du résidu dans au moins une turbine (T1, T2) **caractérisé en ce que** selon un premier mode d'opération dans lequel le débit du mélange envoyé au compresseur (9) a une première valeur, on n'envoie aucune partie du résidu issu de l'au moins une turbine au compresseur et selon un deuxième mode d'opération dans lequel le débit du mélange envoyé au compresseur (9) a une deuxième valeur inférieure à la première valeur, on recycle une partie (32) du résidu issu de l'au moins une turbine au compresseur pour être comprimée avec le mélange (7) à la première pression.

7. Procédé selon la revendication 6 dans lequel pendant le deuxième mode on envoie une partie du premier flux à l'entrée de l'au moins une turbine (T1) sans l'avoir traitée dans le système membranaire (27).

8. Procédé selon la revendication 6 dans lequel pendant le deuxième mode on n'envoie pas de partie du premier flux à l'entrée de l'au moins une turbine (T1) sans l'avoir traitée dans le système membranaire (27).

9. Procédé selon la revendication 6, 7 ou 8 dans lequel pendant le premier mode on n'envoie pas une partie du premier flux à l'entrée de l'au moins une turbine (T1) sans l'avoir traitée dans le système membranaire (27).

10. Appareil de séparation d'un mélange contenant de l'hydrogène, du dioxyde de carbone et au moins un composant tel que le monoxyde de carbone, le méthane ou l'azote ainsi qu'éventuellement de l'eau comprenant un compresseur (9) pour la compression du mélange depuis une première pression jusqu'à une deuxième pression pour former un mélange comprimé, éventuellement une unité de séchage (13) pour le
séchage du mélange comprimé pour former un mélange séché à la deuxième pression, une unité de séparation par condensation partielle et/ou distillation (21) pour la
séparation du mélange comprimé et éventuellement séché à la deuxième pression ou à une troisième pression plus élevée que la deuxième pression pour former au moins un produit enrichi en CO2 et un premier flux appauvri en CO2, un système membranaire (27) pour la
séparation par perméation dans du premier flux appauvri en CO2 pour former au moins un perméat (P1, P2) du système membranaire enrichi en hydrogène et en dioxyde de carbone et appauvri en l'au moins un composant par rapport au premier flux appauvri en CO2 et un résidu (R2) du système membranaire appauvri en hydrogène et dioxyde de carbone et enrichi en l'au moins un composant par rapport au premier flux appauvri en CO2,
au moins une turbine (T1, T2) pour détendre d'au moins une partie du résidu (R2) **caractérisé en ce qu'**il comprend une conduite reliée à la sortie de l'au moins une turbine pour envoyer au moins une partie (32) du résidu à l'entrée du compresseur pour la comprimer dans le compresseur.

11. Appareil selon la revendication 10 comprenant des moyens pour mesurer ou déduire le débit de mélange (7) envoyé au compresseur (9) et des moyens pour ouvrir la conduite reliée à la sortie de l'au moins une turbine pour envoyer au moins une partie (32) du résidu à l'entrée du compresseur en fonction du débit de mélange envoyé au compresseur.
